(19) Europäisches Patentamt
European Patent Office
Office européen des brevets

(11) **EP 2 733 977 A1**

(12) **EUROPEAN PATENT APPLICATION**
published in accordance with Art. 153(4) EPC

(43) Date of publication:
**21.05.2014 Bulletin 2014/21**

(51) Int Cl.:
*H04W 16/32* (2009.01)　　*H04W 24/08* (2009.01)
*H04W 72/04* (2009.01)

(21) Application number: **12838533.3**

(86) International application number:
**PCT/JP2012/006425**

(22) Date of filing: **05.10.2012**

(87) International publication number:
**WO 2013/051285 (11.04.2013 Gazette 2013/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.10.2011　JP 2011222755**

(71) Applicant: **Panasonic Corporation
Osaka 571-8501 (JP)**

(72) Inventor: **NANRI, Masahiko
Osaka 540-6207 (JP)**

(74) Representative: **Grünecker, Kinkeldey,
Stockmair & Schwanhäusser
Leopoldstrasse 4
80802 München (DE)**

(54) **MICRO BASE STATION AND VICTIM TERMINAL DEVICE DETECTION METHOD**

(57) The small cell base station (100) is provided with: a parameter setting unit (111) that obtains a first parameter and sets the first parameter as a parameter of the small cell base station, said first parameter for instructing the terminal device regarding the transmission timing of the reference signal; a measurement unit (105) for measuring interference power in an received signal according to the timing which is specified by the parameter set by the parameter setting unit (111); a detection unit (113) for detecting a terminal device to be connected to the peripheral base station on the basis of the interference power which is measured by the measurement unit (105); and an interference limiting unit (114) for limiting interference to the terminal device which is detected by the detection unit (I 13),

FIG. 7

## Description

Technical Field

The present invention relates to a small cell base station that can be mounted in a cell of a neighboring base station as a transmission destination of reference signals for measuring uplink quality transmitted by a terminal apparatus and a method for detecting an interference receiving terminal apparatus.

Background Art

Presently, introduction of LTE (Long Term Evolution) which is a next-generation mobile communication standard has started all over the world. In LTE, techniques, such as OFDM (Orthogonal Frequency Division Multiplexing) and MIMO (Multiple-Input Multiple-Output) are employed for a downlink, and SC-FDMA (Single Carrier-Frequency Division Multiple Access) or the like is employed for an uplink. This can drastically improve throughputs and can flexibly allocate each physical channel to a radio resource in time and frequency domains.

Furthermore, small cell base stations called Pico eNB or Home eNB (hereinafter referred to as "HeNB") have been developed for the purpose of interpolation for insensitive areas of mobile telephones or distribution of data traffic in recent years. Such a small cell base station is placed in order to cover only a limited narrow area like each home or office. Therefore, in comparison with a large base station (Macro eNB, hereinafter referred to as "MeNB") placed in the past, a small cell base station can be expected to prevent congestion due to traffic centralization and provide a high throughput.

However, an HeNB has no backhaul coordination function with a neighboring base station and therefore has a problem of interference with the neighboring base station. In particular, an HeNB should not interfere with a mobile station (User Equipment, hereinafter referred to as "UE" and the following) connected to the neighboring base station.

For example, a method called ABS (Almost Blank Subframe) described in Non-Patent Literature (hereinafter, abbreviated as NPL) 1 has been discussed in order to solve this problem. As for ABS, either one or both of an MeNB and an HeNB periodically stop transmission in downlink. That is, ABS is a technique for applying non-transmission to some of radio resources in a cell and thereby reducing interference with the other cells. This prevents interference with an interference receiving UE (victim UE) in the time period when an interfering base station (aggressor) stops transmission. Therefore, the reception performance of the interference receiving UE is improved and, thereby the throughput of the interference receiving UE is improved. Here, an interference receiving UE refers to a UE receiving interference from base stations different from a base station connected to the interference receiving UE.

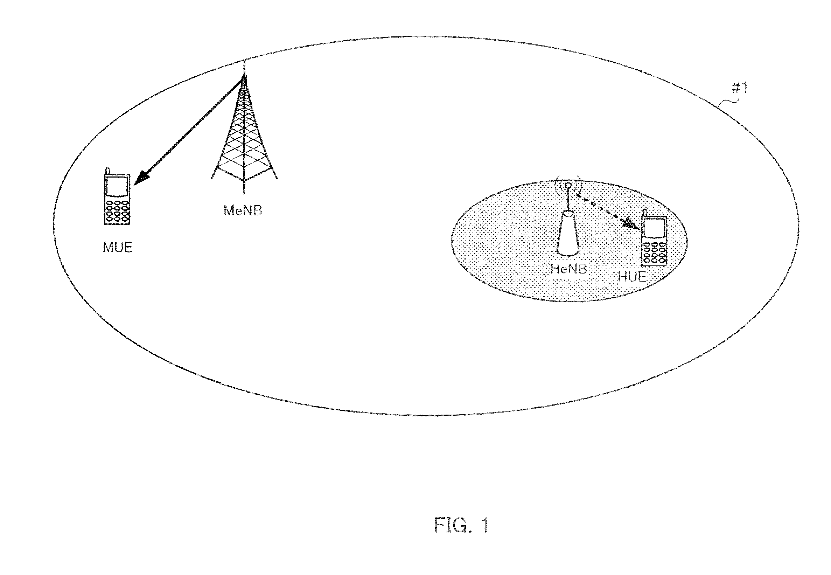

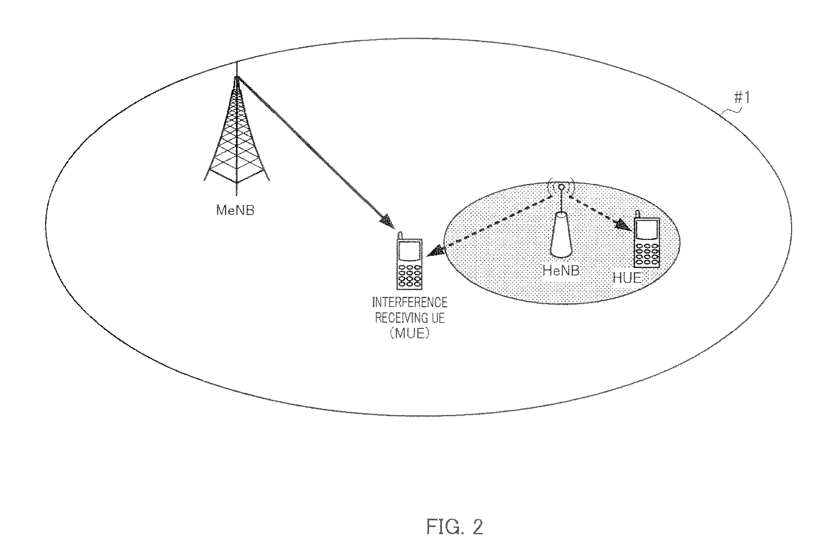

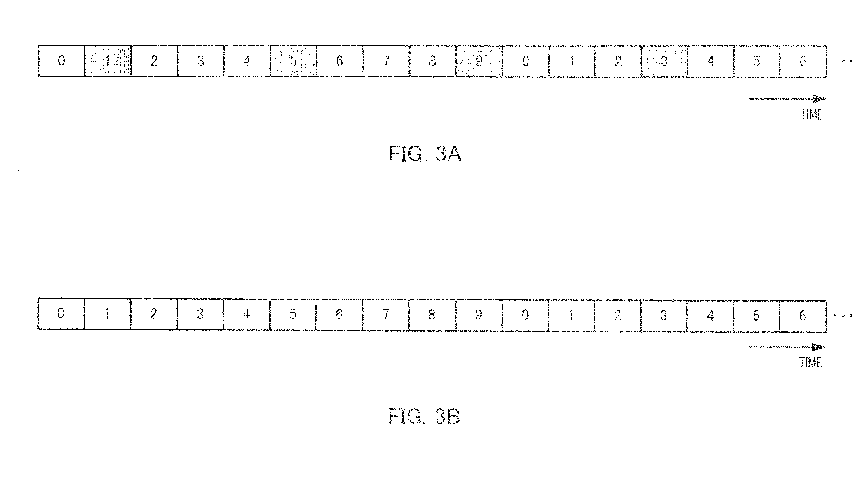

ABS will be explained in more detail with reference to FIGS. 1 to 3A and 3B. FIG. 1 illustrates a system configuration in the state where no interference receiving UE exists. FIG. 2 illustrates a system configuration in the state where an interference receiving UE exists. FIGS. 3A and 3B (in particular, FIG. 3A) illustrate the ABS pattern of an HeNB. In FIG. 1 and FIG. 2, the HeNB is assumed to be mounted in cell #1 of an MeNB that is a neighboring base station. In FIG. 1 and FIG. 2, a UE connected to the MeNB is referred to as "MUE", and a UE connected to the HeNB is referred to as "HUE". In FIG. 1 and FIG. 2, transmission waves indicated by solid lines represent transmission waves from the MeNB, and transmission waves indicated by dashed lines represent transmission waves from the HeNB. In FIGS. 3A and 3B, transmission units indicated by 0, 1, 2, ... represent subframes, and subframes indicated by hatching represent subframes in which transmission is stopped.

For example, as illustrated in FIG. 2, when the MUE connected to the MeNB exists in the neighborhood of the HeNB, this MUE as an interference receiving UE receives interference from the HeNB. Therefore, the HeNB stops downlink transmission periodically using the ABS pattern illustrated in FIG. 3A to be able to reduce interference with an interference receiving UE from the HeNB. Thereby, the reception performance of the interference receiving UE is expected to be improved. In the case of the ABS pattern in FIG. 3A, the HeNB stops transmission of subframes 1, 5, 9, and 3.

On the other hand, when the MUE connected to the MeNB does not exist in the neighborhood of the HeNB as illustrated in FIG. 1, the HeNB does not need to stop downlink transmission. Therefore, in order to use resources in the own cell without waste, it is desirable to perform downlink transmission in all subframes as illustrated in FIG. 3B. If ABS is performed in such a situation that no interference receiving UE exists, resources in the own cell is wasted to result in a decrease in the throughput of the whole system. Therefore, it is necessary to implement a function to detect an interference receiving UE in an HeNB and to apply ABS at suitable timing. NPL 2 describes detecting uplink reference signals (RSs) transmitted by an interference receiving UE, thereby detecting the presence or absence of the interference receiving UE, and applying ABS at suitable timing.

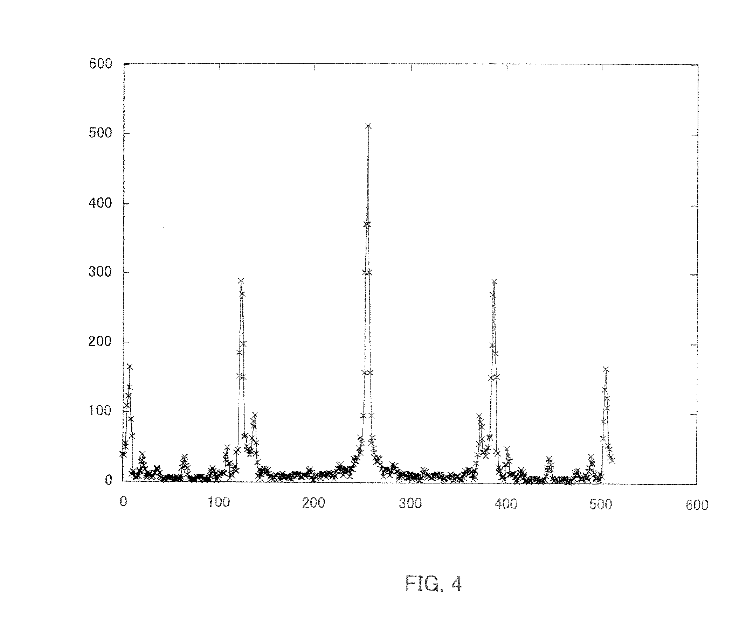

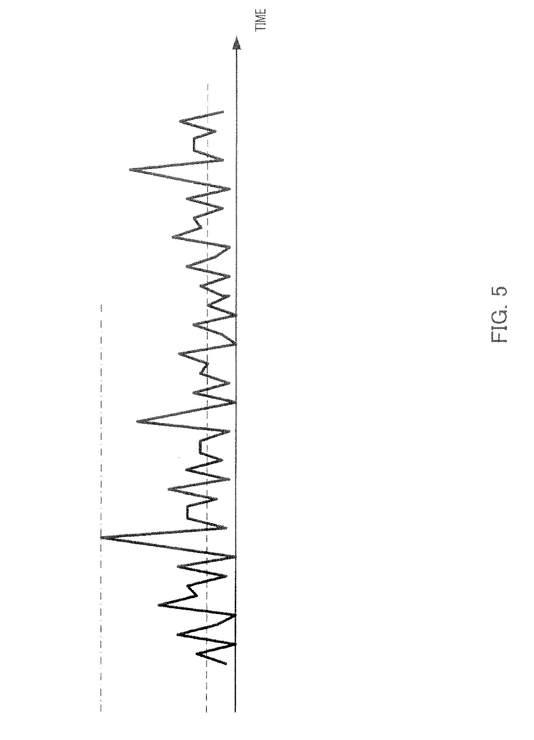

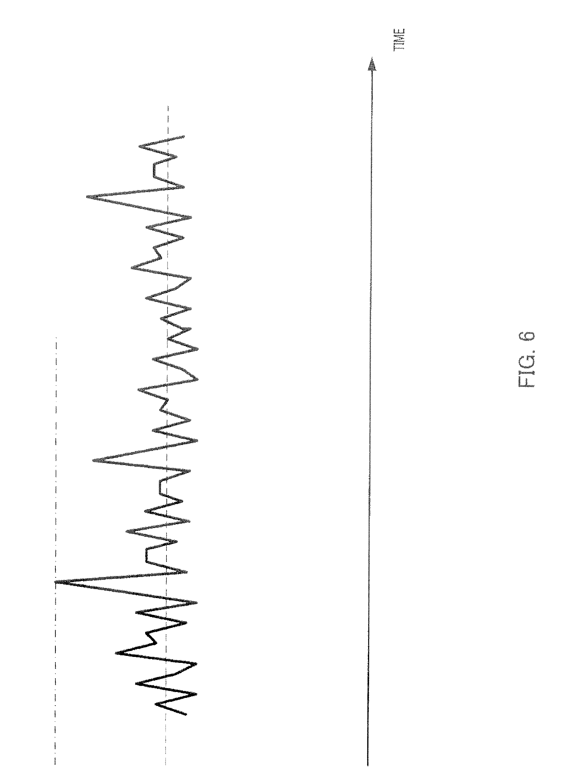

Hereinafter, the method for detecting an interference receiving UE described in NPL 2 will be explained with reference to FIG. 4 to FIG. 6. FIG. 4 illustrates the autocorrelation function of time domain waves of reception signals when an interference receiving UE is detected. FIG. 5 illustrates time transition of reception signal electric power of an HeNB when an interference receiving UE does not exist. FIG. 6 illustrates time transition of reception signal electric power of an HeNB when an interference receiving UE exists. In FIG. 5 and FIG. 6, dashed lines indicate the average level of reception signal electric power, and dashed-dotted lines indicate the peak level of the reception signal electric power.

When performing the hollowing determination processes 1 and 2 on reception signals and a determination condition in at least one of the determination processes 1 and 2 is satisfied, an HeNB judges that an interference receiving UE exists.

First, the determination process 1 finds the autocorrelation function of time domain waves of reception signals. At this time, when no interference receiving UE exists (that is, when an HeNB receives no reference signals transmitted by an interference receiving UE), this means finding the autocorrelation function of white noise and therefore observing only one peak. In contrast to this, when an interference receiving UE transmits reference signals, a plurality of peaks as illustrated in FIG. 4 are observed in the found autocorrelation function according to the feature of a Zadoff-Chu sequence constituting reference signals. More specifically, when the second highest peak among the peaks in the autocorrelation function is compared with a threshold and exceeds the threshold, it can be determined that an interference receiving UE exists (in other words, that an HeNB receives reference signals transmitted by an interference receiving UE).

The determination process 2 measures a PAR (Peak to Average Ratio) along time transition of reception signal electric power. When no interference receiving UE exists, an HeNB receives no reference signals transmitted by an interference receiving UE and therefore measures the PAR of white noise as illustrated in FIG. 5. Consequently, the measured PAR has a relatively high value. In contrast to this, when an interference receiving UE exists, an HeNB receives reference signals transmitted by an interference receiving UE. As a result, electric power distribution having an average level uniformly raised more than FIG. 5 is observed due to the constancy of amplitudes of a Zadoff-chu sequence constituting reference signals, as illustrated in FIG. 6. Therefore, the HeNB acquires a low PAR value. Therefore, in comparison of a PAR with the threshold, if the PAR is equal to or more than the threshold, it can be determined that no interference receiving UE exists; and if the PAR is less than the threshold, it can be determined that an interference receiving UE exists.

Citation List

Non-Patent Literature

NPL 1 R1-105779 "Way Forward on time-domain extension of Rel 8/9 backhaul-based ICIC" (RAN1)
NPL2 R1-100193 "Victim UE Aware Downlink Interference Management", picoChip, Kyocera

Summary of Invention

Technical Problem

However, in NPL 2, an interference receiving UE does not always transmit reference signals. Therefore, when no reference signals are transmitted, a PAR has a high value even though an interference receiving UE exists. Consequently, an interference receiving UE may problematically be overlooked when existing in the neighborhood of the HeNB in reality.

Moreover, a detector dedicated for detecting an interference receiving UE is needed in NPL 2, and this has a problem of an increase in the circuit size of an HeNB.

Moreover, in NPL 2, an HeNB cannot grasp the transmission timing of reference signals from an interference receiving UE and therefore needs to always operate the detector for detecting an interference receiving UE. This has a problem of an increase in power consumption of the HeNB.

It is an object of the present invention to provide a small cell base station and a method for detecting an interference receiving terminal apparatus that can surely detect the existence of an interference receiving UE and can surely improve the reception perfonnance of the interference receiving UE, without an increase in the circuit size of the small cell base station, and that can reduce the frequency of a process for detecting the interference receiving UE in comparison with conventional techniques, and can reduce the power consumption.

Solution to Problem

A small cell base station according to an aspect of the present invention is a small cell base station to be mounted in a cell of a neighboring base station that is a transmission destination of a reference signal used for measuring uplink quality transmitted by a terminal apparatus, the small cell base station including: a parameter setting section that acquires a first parameter indicated to the terminal apparatus, and that sets the first parameter as a parameter of the small cell base station, the first parameter indicating transmission timing at which the terminal apparatus is to transmit the reference signal; a measurement section that measures interference electric power in a received signal at timing specified by the parameter set by the parameter setting section; a detecting section that detects the terminal apparatus connected to the neighboring base station based on the interference electric power measured by the measurement section; and an interference restriction section that restricts interference with the terminal apparatus detected by the detecting section.

A method for detecting an interference receiving terminal apparatus according to an aspect of the present invention is a method for detecting an interference receiving terminal apparatus performed by a small cell base station to be mounted in a cell of a neighboring base station that is a transmission destination of a reference signal for measuring uplink quality transmitted by a terminal apparatus, the method including: acquiring a first parameter indicated to the terminal apparatus, and setting the first parameter as a parameter of the small cell base station, the first parameter indicating transmission timing at which the terminal apparatus is to transmit the reference signal; measuring interference electric power in a received signal at timing specified by the parameter set to the small cell base station; and detecting the terminal apparatus connected to the neighboring base station based on the measured interference electric power.

Advantageous Effects of Invention

According to the present invention, a small cell base station can surely detect the existence of an interference receiving UE and can surely improve the reception performance of the interference receiving UE, without an increase in the circuit size of the small cell base station, and that can reduce the frequency of a process for detecting the interference receiving UE in comparison with conventional techniques, and can reduce the power consumption.

Brief Description of Drawings

FIG. 1 illustrates a system configuration in the state where no interference receiving UE exists;
FIG. 2 illustrates a system configuration in the state where an interference receiving UE exists;
FIGS. 3A and 3B illustrate the ABS pattern of an HeNB;
FIG. 4 illustrates the autocorrelation function of time domain waves of reception signals when an interference receiving UE is detected;
FIG. 5 illustrates time transition of reception signal electric power of an HeNB when an interference receiving UE does not exist;
FIG. 6 illustrates time transition of reception signal electric power of an HeNB when an interference receiving UE exists;
FIG. 7 is a block diagram illustrating a configuration of a small cell base station according to the embodiment of the present invention;
FIG. 8 illustrates the uplink frame format of LTE;
FIG. 9 illustrates an example of an SRS subframe configuration in the embodiment of the present invention;
FIG. 10 illustrates an example of an SRS bandwidth configuration in the embodiment of the present invention;
FIG. 11 illustrates a reception quality buffer in the embodiment of the present invention;

FIG. 12 illustrates a first process for detecting an interference receiving UE in the embodiment of the present invention;
FIG. 13 illustrates a second process for detecting an interference receiving UE in the embodiment of the present invention; and
FIG. 14 illustrates a third process for detecting an interference receiving UE in the embodiment of the present invention.

Description of Embodiments

Hereafter, embodiments of the present invention will be explained in detail with reference to the accompanying drawing.

(Embodiment)

<Configuration of small cell base station>

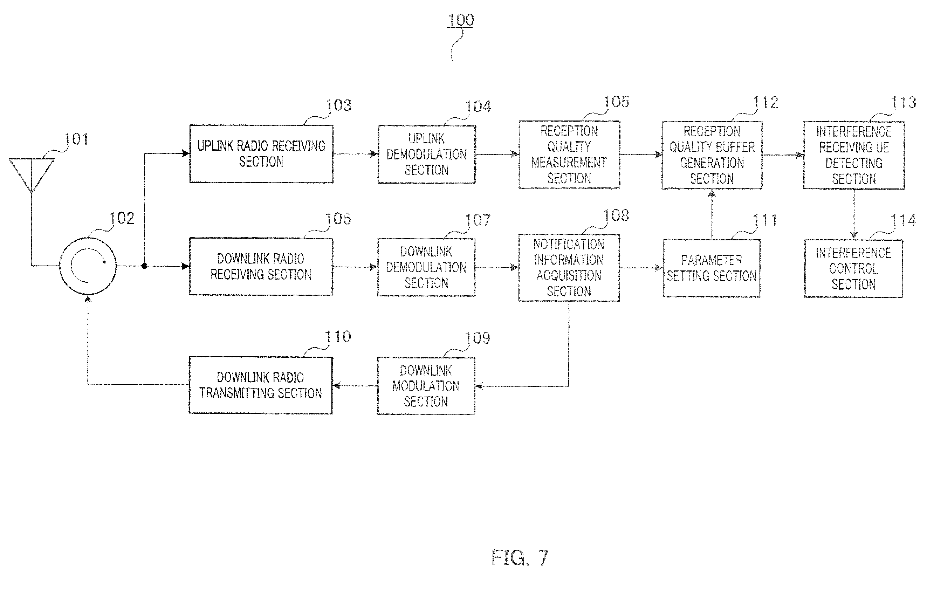

FIG. 7 is a block diagram illustrating a configuration of small cell base station 100 according to an embodiment of the present invention.
Antenna 101 outputs received high frequency signals to circulator 102. Antenna 101 transmits high frequency signals inputted from circulator 102.
Circulator 102 switches the output to uplink radio receiving section 103 and downlink radio receiving section 106 of high frequency signals inputted from antenna 101, and the output to antenna 101 of high frequency signals inputted from downlink radio transmitting section 110. Here, uplink radio receiving section 103 includes the expression "uplink" since receiving signals from a UE, and downlink radio receiving section 106 includes the expression "downlink" since receiving signals from an MeNB. Downlink radio transmitting section 110 includes the expression "downlink" since transmitting signals to a UE.
Uplink radio receiving section 103 extracts only uplink signal components transmitted by a UE, from high frequency signals inputted from circulator 102. Uplink radio receiving section 103 converts the extracted uplink signal components into uplink baseband signals and outputs the resultant signals to uplink demodulation section 104.
Uplink demodulation section 104 performs SC-FDMA demodulation on the uplink baseband signals inputted from uplink radio receiving section 103, and extracts reference signals for measuring the uplink quality (Sounding Reference Signals, hereinafter referred to as "SRSs") transmitted by a UE and reception signals in a blank resource. Uplink demodulation section 104 outputs the SRSs and the reception signals in the blank resource which are extracted, to reception quality measurement section 105. Here, SRSs refer to signals transmitted periodically in a predetermined cycle by a UE and used conventionally for measuring the uplink quality. A blank resource is a resource for transmitting SRSs. SRSs and a blank resource will be described below.

Reception quality measurement section 105 measures interference electric power in a blank resource, from the SRSs and the reception signals in the blank resource which are inputted from uplink demodulation section 104, and outputs the measurement result to reception quality buffer generation section 112.

Downlink radio receiving section 106 extracts only downlink signal components which transmitted by an MeNB, from high frequency signals inputted from circulator 102. Downlink radio receiving section 106 converts the extracted downlink signal components into downlink reception baseband signals and outputs the resultant signals to downlink demodulation section 107.

Downlink demodulation section 107 processes the downlink reception baseband signals inputted from downlink radio receiving section 106 through, for example, OFDM demodulation, QPSK (Quadrature Phase Shift Keying) demodulation, error correction decoding, and extracts downlink digital signals transmitted by the MeNB. Downlink demodulation section 107 outputs the extracted downlink digital signals to notification information acquisition section 108.

Notification information acquisition section 108 extracts downlink notification information relevant to the SRSs, from the downlink digital signals inputted from downlink demodulation section 107. Notification information acquisition section 108 outputs the extracted downlink notification information to downlink modulation section 109 and parameter setting section 111. This downlink notification information includes a plurality of parameters describe below.

In order to transmit downlink notification information to an UE, downlink modulation section 109 performs predetermined modulation processes such as QPSK modulation and OFDM modulation on the downlink notification information inputted from notification information acquisition section 108, the, and generates downlink transmission baseband signals. Downlink modulation section 109 outputs the generated downlink transmission baseband signals to downlink radio transmitting section 110.

Downlink radio transmitting section 110 converts the downlink transmission baseband signals inputted from downlink modulation section 109, into high frequency signals, and outputs the resultant signals to circulator 102.

Parameter setting section 111 sets parameters included in the downlink notification information inputted from notification information acquisition section 108 as parameters of the own station. Parameter setting section 111 reports the set parameters to reception quality buffer generation section 112.

Reception quality buffer generation section 112 generates a reception quality buffer according to the parameters reported from parameter setting section 111. Reception quality buffer generation section 112 holds the measurement result inputted from reception quality measurement section 105 in the generated reception quality buffer. In this case, reception quality buffer generation section 112 holds the measurement result inputted from reception quality measurement section 105 in sequence in the reception quality buffer at timing specified by the parameters reported from parameter setting section 111. The reception quality buffer will be described below.

Interference receiving UE detecting section 113 detects an interference receiving UE based on the measurement result of interference electric power held in the reception quality buffer in reception quality buffer generation section 112. Interference receiving UE detecting section 113 outputs the detection result of the interference receiving UE to interference control section 114. A method for detecting an interference receiving UE will be described below.

Interference control section 114 performs a control for restricting interference given to the detected interference receiving UE, based on the detection result inputted from interference receiving UE detecting section 113.

<Outline of SRS>

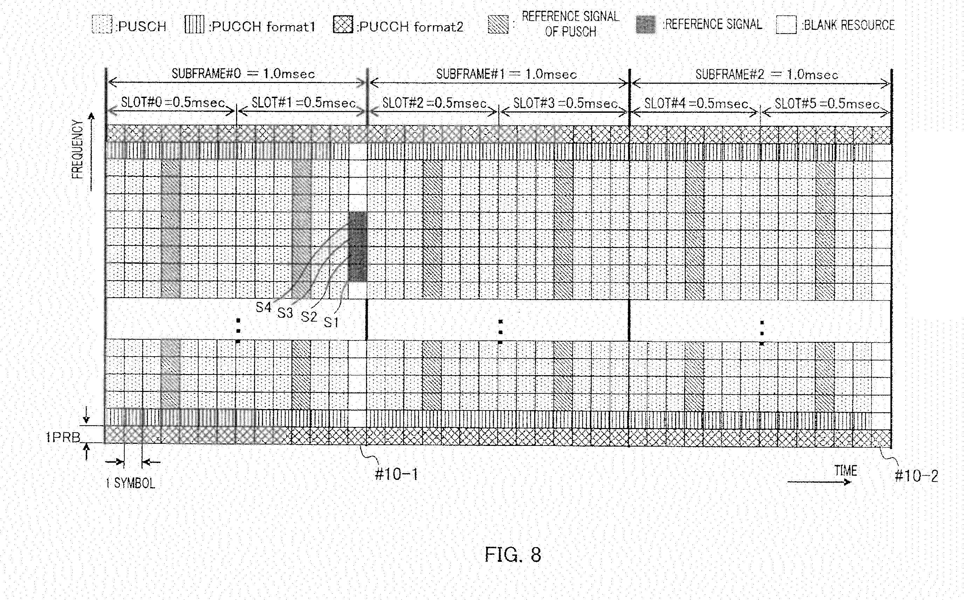

The outline of SRS used for detecting an interference receiving UE will be explained with reference to FIG. 8. FIG. 8 illustrates an uplink frame format of LTE.

SRSs are signals transmitted to an MeNB from a UE (MUE) in order to measure uplink quality. The transmission timing, the transmission cycle, the number of frequency resources (Physical Resource Block, hereinafter referred to as "PRB"), the frequency hopping pattern, or the like of SRSs are indicated from the MeNB.

With reference to FIG. 8, the minimum configuration unit of an uplink frame in LTE is 1 SC-FDMA symbol. One slot includes seven symbols. One subframe includes two slots. A subframe serves as a transmission unit in various physical channels. The configuration unit of a frequency is 1 PRB.

With reference to FIG. 8, a resource for transmitting SRSs is not necessarily secured for each subframe, but is set according to the number of terminal apparatuses under the control of an MeNB, the operation policy of a communication provider, or the like. A resource for transmitting SRSs is secured in the form of, for example, blank resources #10-1 and #10-2. Subframes for securing blank resources #10-1 and #10-2 (Cell Specific SRS Subframe, hereinafter referred to as "SRS subframe") are reported to all UEs in the MeNB area using a parameter called SRS Subframe Configuration (first parameter).

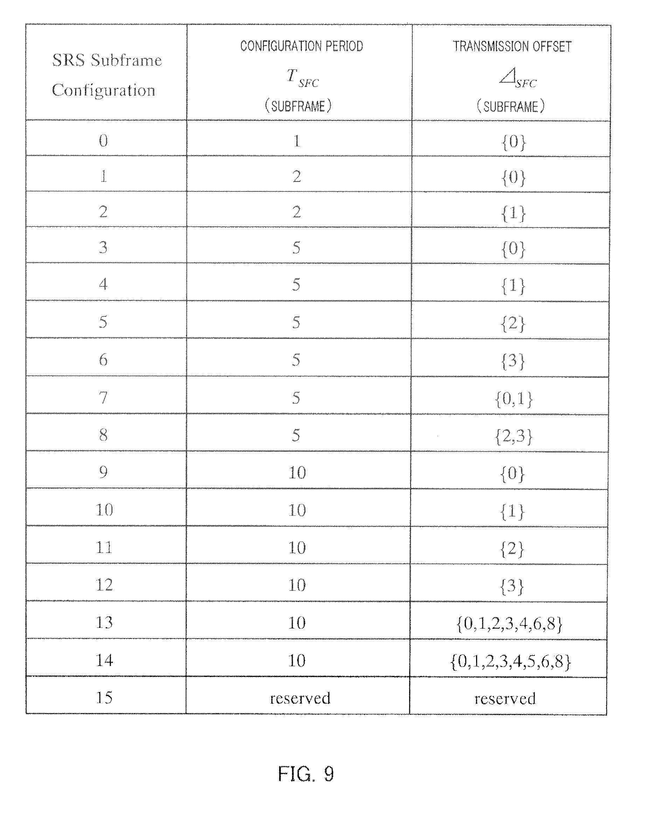

FIG. 9 illustrates an example of SRS Subframe Configuration.

With reference to FIG. 9, subframes satisfying Equation 1 below serve as subframes for securing blank resources #10-1 and #10-2.

[1]

$$\left(\left\lfloor n_s / 2 \right\rfloor \bmod T_{SFC}\right) \in \Delta_{SFC} \qquad \text{... (Equation 1)}$$

where $n_S$ is a slot counter ($n_S$ = 0, 1, ..., 19), $T_{SFC}$ is Configuration Period, and $\Delta_{SFC}$ is Transmission Offset.

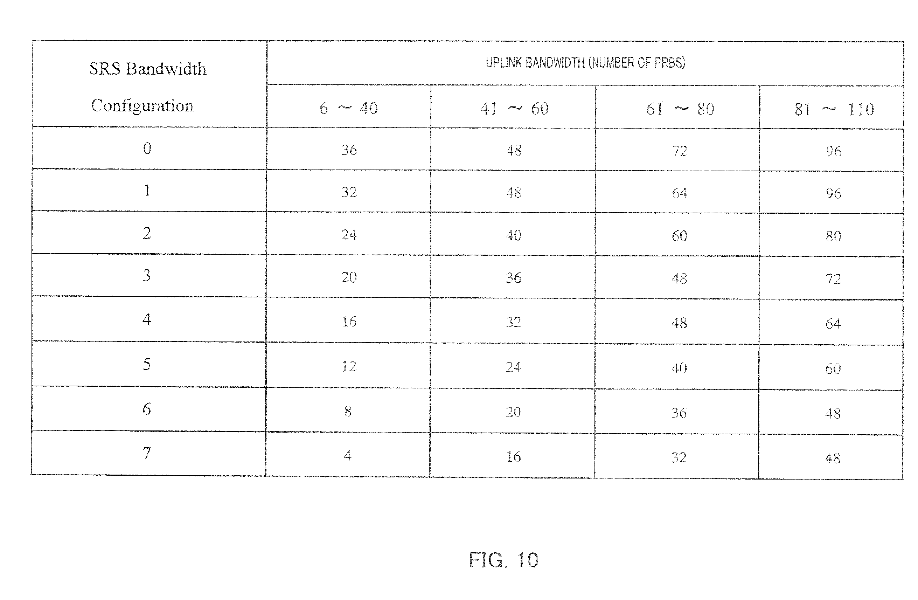

The numbers of PRBs in blank resources #10-1 and #10-2 are determined on the basis of a parameter called SRS Bandwidth Configuration (second parameter) and Uplink bandwidth information (third parameter). That is, the transmission band of SRSs is determined on the basis of SRS Bandwidth Configuration and Uplink bandwidth information. These parameters are reported to all UEs in the MeNB area. FIG. 10 illustrates an example of SRS Bandwidth Configuration.

Each UE transmits SRSs using a part or the whole of blank resources #10-1 and #10-2 secured by the process explained above. For example, in FIG. 8, SRSs #S1 to S4 are transmitted using a part of blank resource #10-1.

The transmission timing and the number of PRBs of SRSs do not necessarily coincide with the blank resource, but are individually specified for each UE. In order to avoid interference from SRSs transmitted by each UE with SRSs transmitted by other UEs, each UE deletes the last symbol of "PUSCH" and "PUCCH format 1" in an SRS subframe regardless of whether to transmit SRSs (refer to FIG. 8).

<Operations of Small cell base station>

First, small cell base station 100 receives notification information transmitted by a neighboring base station, and notification information acquisition section 108 extracts downlink notification information relevant to SRSs, from the received notification information. Parameter setting section 111 sets parameters included in the downlink notification information as parameters of the own station.

More specifically, parameter setting section 111 sets three parameters which are SRS Subframe Configuration, SRS Bandwidth Configuration, and Uplink bandwidth information, as parameters of the own station. Here, SRS Subframe Configuration is set to 3, SRS Bandwidth Configuration to 4, and Uplink bandwidth to 50 PRBs as an example.

Next, small cell base station 100 transmits the parameters set as parameters of the own station to a UE.

Next, reception quality buffer generation section 112 generates, in its inside, a reception quality buffer for holding interference electric power measured in blank resources #10-1 and #10-2 according to the parameters set as the parameters of the own station.

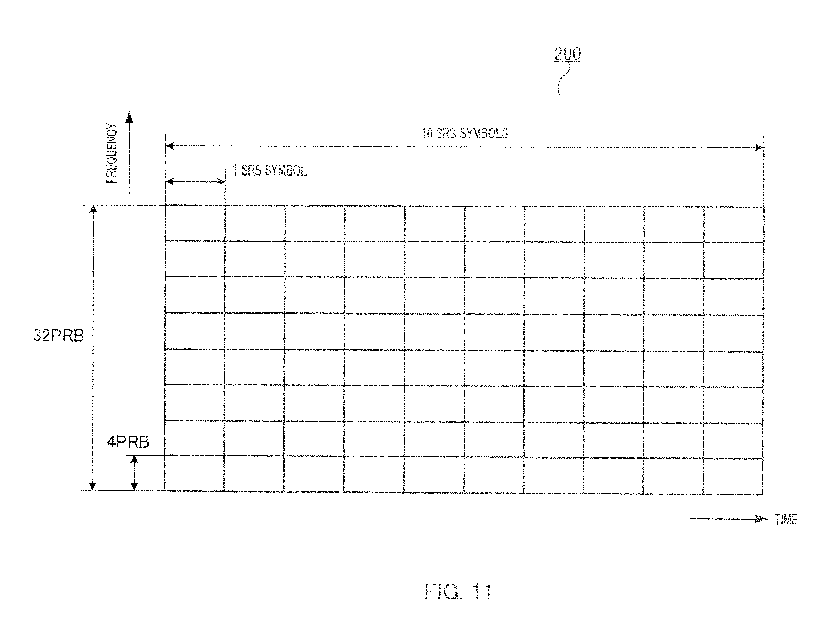

FIG. 11 illustrates reception quality buffer 200.

Reception quality buffer 200 holds interference electric power measured in blank resources #10-1 and #10-2 for every 4 PRBs. In the present embodiment, since SRS Bandwidth Configuration is set to 4, and Uplink bandwidth to 50 PRBs, the bandwidths of blank resources #10-1 and #10-2 are equal to 32 PRBs with reference to a table in FIG. 10. Therefore, the number of elements in the frequency direction of reception quality buffer 200 is equal to 32 / 4 = 8. Furthermore, reception quality buffer 200 provides elements corresponding to a plurality of symbols for every 1 SRS symbol in the time direction in order to time-average the interference electric power of blank resources #10-1 and #10-2. In the present embodiment, the number of elements of the time direction of reception quality buffer 200 is set to 10 as an example.

Next, reception quality measurement section 105 measures noise and interference levels (hereinafter referred to as "N") of blank resources #10-1 and #10-2 for every 4 PRBs in SRS subframes, and holds the measurement result in reception quality buffer 200 of reception quality buffer generation section 112. More specifically, small cell base station 100 measures, in respect to a resource for transmitting SRSs from a UE (HUE) of the own station, the electric power in reception quality measurement section 105, and finds N by subtracting the electric power of SRSs from the reception electric power of the resource. Small cell base station 100 considers the reception power, without modification, measured in reception quality measurement section 105 to be N in respect to a resource for not transmitting SRSs from a UE (HUE) of the own station. In the present embodiment, since SRS Subframe Configuration = 3, the measurement is performed for every five subframes on the basis of FIG. 9 and Equation 1. When holding a measurement result in reception quality buffer 200, reception quality buffer generation section 112 shifts a measurement result already held in reception quality buffer 200 in the time direction, and holds a newly measured result. In this case, when the capacity of reception quality buffer 200 is filled completely, reception quality buffer generation section 112 renounces the oldest measurement result in reception quality buffer 200.

Next, interference receiving UE detecting section 113 detects an interference receiving UE using the measurement result held in reception quality buffer 200.

Then, if an interference receiving UE is detected, interference control section 114 performs a control for restricting interference with the detected interference receiving UE. For example, if an interference receiving UE is detected, interference control section 114 controls ABS so as to be performed. This can surely prevent the deterioration of reception performance in the interference receiving UE.

<Method for Detecting Interference Receiving UE>

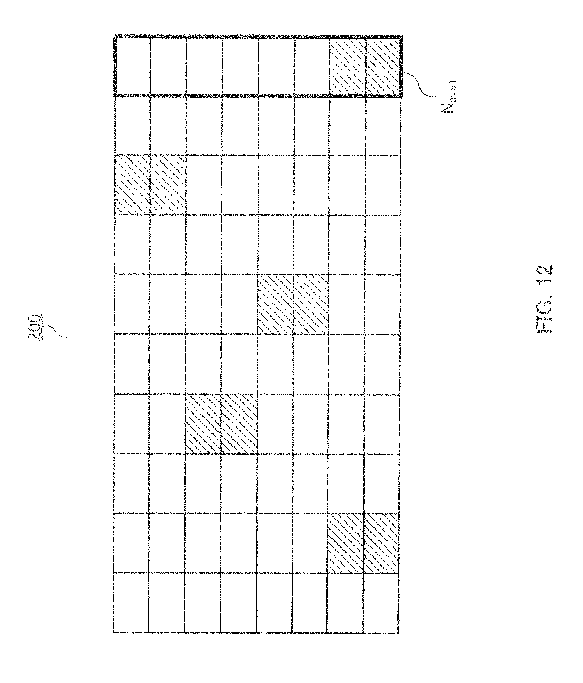

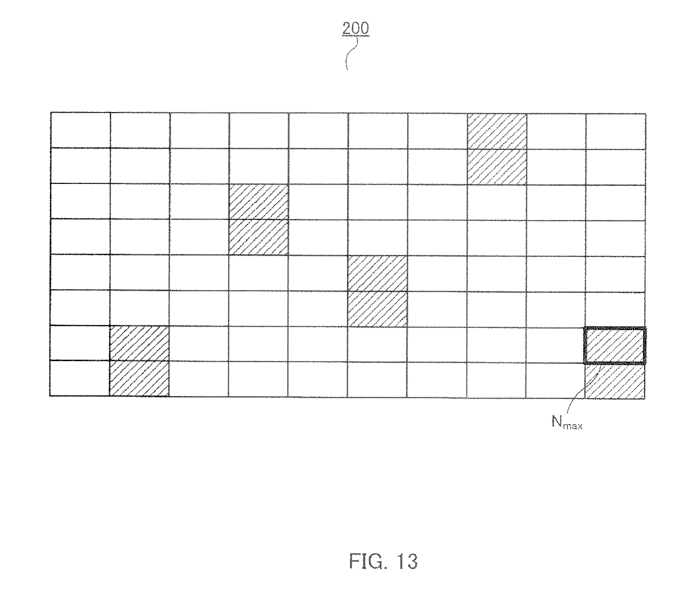

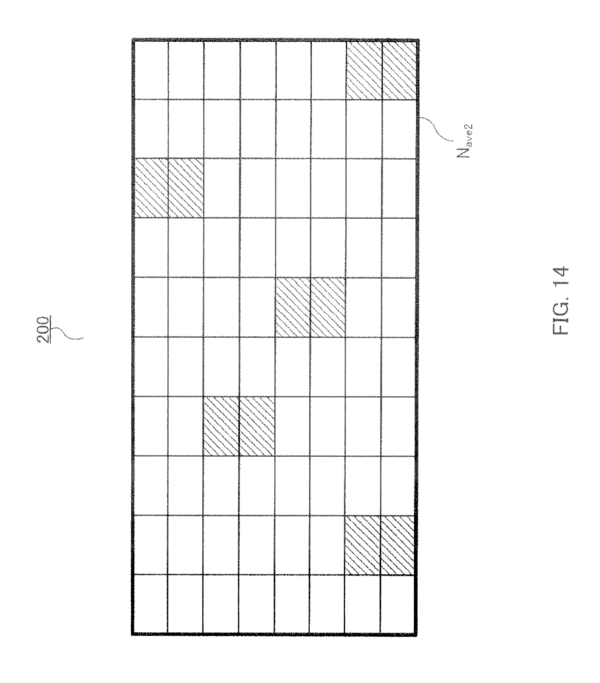

Interference receiving UE detecting section 113 performs three processes which are the following first to third processes on the measurement result held in reception quality buffer 200, and determines that an interference receiving UE exists when at least one condition in the processes is satisfied. FIG. 12 illustrates the first process for detecting an interference receiving UE. FIG. 13 illustrates the second process for detecting an interference receiving UE. FIG. 14 illustrates the third process for detecting an interference receiving UE. Each process will be explained below.

{First process}

As illustrated in FIG. 12, interference receiving UE detecting section 113 calculates the average value ($N_{avel}$) of N in all bands (32 PRBs) in the newest blank resource (SRS symbol time) of the SRS subframe held in reception quality buffer 200. Interference receiving UE detecting section 113 compares calculated $N_{avel}$ with a first threshold, and judges that "an interference receiving UE exists" if calculated $N_{avel}$ exceeds the first threshold.

{Second process}

As illustrated in FIG. 13, interference receiving UE detecting section 113 extracts an element in a band (4 PRBs) having largest N in the newest blank resource of the SRS subframe held in reception quality buffer 200 ($N_{max}$). Next, interference receiving UE detecting section 113 calculates the average value ($N_{avel}$) of N in all bands (32 PRBs) in the newest blank resource of the SRS subframe held in reception quality buffer 200. Interference receiving UE detecting section 113 calculates a ratio between extracted $N_{max}$ and calculated $N_{avel}$, compares the calculated ratio with a second threshold, and judges that "an interference receiving UE exists" if the calculated ratio exceeds the second threshold.

{Third process}

As illustrated in FIG. 14, interference receiving UE detecting section 113 first calculates the average value of all N held in reception quality buffer 200 ($N_{ave2}$). Next, interference receiving UE detecting section 113 calculates the average value (Navel) of N in all bands (32 PRBs) in the newest blank resource of the SRS subframe held in reception quality buffer 200. Interference receiving UE detecting section 113 calculates a ratio between $N_{avel}$ and $N_{ave2}$, compares the calculated ratio with a third threshold, and judges that "an interference receiving UE exists" if the calculated ratio exceeds the third threshold.

<Advantageous Effects of Present Embodiment>

According to the present embodiment, the HeNB which is a small cell base station measures interference electric power at timing specified by SRS Subframe Configuration, and detects an interference receiving UE on the basis of the measured interference electric power. Thereby, the HeNB can surely detect the existence of an interference receiving UE and can surely improve the reception performance of the interference receiving UE without an increase in the circuit size, and that can reduce the frequency of a process for detecting the interference receiving UE in comparison with conventional techniques, and can therefore reduce the power consumption.

Moreover, according to the present embodiment, the HeNB detects the presence or absence of an interference receiving UE using SRSs used for measuring the uplink quality in conventional techniques. Therefore, it is not necessary to transmit, receive, and process new signals. This can simplify the configuration and reduce an increase in the manufacturing cost.

According to the present embodiment, the HeNB measures interference electric power for every transmission bandwidth specified on the basis of SRS Bandwidth Configuration and Uplink bandwidth information, and can therefore improve the detection accuracy of an interference receiving UE using the measurement result of interference electric power.

According to the present embodiment, the HeNB generates a reception quality buffer on the basis of parameters set as parameters for the own station, and can therefore improve the detection accuracy of an interference receiving UE using the measurement result of interference electric power held in the reception quality buffer.

According to the present embodiment, an interference receiving UE is detected using the determination results through three kinds of the first to third processes. This can surely detect an interference receiving UE.

<Variations of Present Embodiment>

In the present embodiment, SRS Bandwidth Configuration and Uplink bandwidth information are set as parameters for a small cell base station. However, the present invention is not limited to this, and does not need to set SRS Bandwidth Configuration and Uplink bandwidth information. In this case, interference electric power is measured at timing specified by SRS Subframe Configuration to detect an interference receiving UE on the basis of the measured interference electric power. That is, the second process described above is not performed but the first process and the third process detect an interference receiving UE.

In the present embodiment, the present invention is applied to a Pico eNB or an HeNB as a small cell base station. However, the present invention is not limited to this, but can be applied to any base station other than a Pico eNB and an HeNB.

In the present embodiment, the HeNB receives notification information of a neighboring base station. However, the present invention is not limited to this. For example, OAM (Operation And Maintenance) or HeMS (Home eNB Maintenance System) may report parameters relevant to SRSs of a neighboring base station directly to the HeNB.

In the present embodiment, the small cell base station detects an interference receiving UE using parameters relevant to SRSs. However, the present invention is not limited two this, but may detect an interference receiving UE using parameters relevant to Periodic CQI (PUCCH format 2). That is, in the present invention, the small cell base station can detect an interference receiving UE using certain signals transmitted continuously at intervals by a UE.

The disclosure of Japanese Patent Application No. 2011-222755, filed on October 7, 2011, including the specification, drawings and abstract, is incorporated herein by reference in its entirety.

Industrial Applicability

The present invention is suitable for a small cell base station that can be mounted in a cell of a neighboring base station as a transmission destination of reference signals for measuring uplink quality transmitted by a terminal apparatus and a method for detecting an interference receiving terminal apparatus.

Reference Signs List

| 100 | Small cell base station |
| 101 | Antenna |
| 102 | Circulator |
| 103 | Uplink radio receiving section |
| 104 | Uplink demodulation section |
| 105 | Reception quality measurement section |
| 106 | Downlink radio receiving section |
| 107 | Downlink demodulation section |
| 108 | Notification information acquisition section |
| 109 | Downlink modulation section |
| 110 | Downlink radio transmitting section |
| 111 | Parameter setting section |
| 112 | Reception quality buffer generation section |
| 113 | Interference receiving UE detecting section |
| 114 | Interference control section |

**Claims**

1. A small cell base station to be mounted in a cell of a neighboring base station that is a transmission destination of a reference signal used for measuring uplink quality transmitted by a terminal apparatus, the small cell base station comprising:

    a parameter setting section that acquires a first parameter indicated to the terminal apparatus, and that sets the first parameter as a parameter of the small cell base station, the first parameter indicating transmission timing at which the terminal apparatus is to transmit the reference signal;

    a measurement section that measures interference electric power in a received signal at timing specified by the parameter set by the parameter setting section;

    a detecting section that detects the terminal apparatus connected to the neighboring base station based on the interference electric power measured by the measurement section; and

    an interference restriction section that restricts interference with the terminal apparatus detected by the detecting section.

2. The small cell base station according to claim 1, wherein:

    the parameter setting section acquires a second parameter, and sets the second parameter as a parameter of the small cell base station in addition to the first parameter, the second parameter indicating a transmission band by which the terminal apparatus is to transmit the reference signal; and

    the measurement section measures interference electric power in a received signal at the specified timing for each transmission band specified by the parameter set by the parameter setting section.

3. The small cell base station according to claim 2, further comprising a buffer generation section that generates a buffer which holds a measurement result of the interference electric power for each transmission band specified by the parameter set by the parameter setting section and for each predetermined symbol time, wherein:

    the measurement section causes the buffer to hold the measurement result of the interference electric power in sequence; and

    the detecting section detects the terminal apparatus connected to the neighboring base station based on the interference electric power held in the buffer.

4. The small cell base station according to claim 3, wherein the detecting section detects the terminal apparatus connected to the neighboring base station, when an average value of the interference electric power in all bands in a latest symbol time held in the buffer exceeds a threshold.

5. The small cell base station according to claim 3, wherein the detecting section calculates a ratio between an average value of the interference electric power in all bands in a latest symbol time held in the buffer and the maximum value of the interference electric power in each of the bands, and detects the terminal apparatus connected to the neighboring base station when the ratio exceeds a threshold.

6. The small cell base station according to claim 3, wherein the detecting section calculates a first average value of all the interference electric power held in the buffer, calculates a second average value of the interference electric power in all bands in a latest symbol time held in the buffer, and detects the terminal apparatus connected to the neighboring base station when a ratio between the first average value and the second average value exceeds a threshold.

7. A method for detecting an interference receiving terminal apparatus performed by a small cell base station to be mounted in a cell of a neighboring base station that is a transmission destination of a reference signal for measuring uplink quality transmitted by a terminal apparatus, the method comprising:

acquiring a first parameter indicated to the terminal apparatus, and setting the first parameter as a parameter of the small cell base station, the first parameter indicating transmission timing at which the terminal apparatus is to transmit the reference signal;
measuring interference electric power in a received signal at timing specified by the parameter set to the small cell base station; and
detecting the terminal apparatus connected to the neighboring base station based on the measured interference electric power.

#1

HUE

HeNB

MeNB

MUE

FIG. 1

FIG. 2

| 0 | 1 | 2 | 3 | 4 | 5 | 6 | 7 | 8 | 9 | 0 | 1 | 2 | 3 | 4 | 5 | 6 | $\cdots$ |

TIME

FIG. 3A

| 0 | 1 | 2 | 3 | 4 | 5 | 6 | 7 | 8 | 9 | 0 | 1 | 2 | 3 | 4 | 5 | 6 | $\cdots$ |

TIME

FIG. 3B

FIG. 4

FIG. 5

EP 2 733 977 A1

FIG. 6

15

FIG. 7

FIG. 8

| SRS Subframe Configuration | CONFIGURATION PERIOD $T_{SFC}$ (SUBFRAME) | TRANSMISSION OFFSET $\Delta_{SFC}$ (SUBFRAME) |
|---|---|---|
| 0 | 1 | {0} |
| 1 | 2 | {0} |
| 2 | 2 | {1} |
| 3 | 5 | {0} |
| 4 | 5 | {1} |
| 5 | 5 | {2} |
| 6 | 5 | {3} |
| 7 | 5 | {0,1} |
| 8 | 5 | {2,3} |
| 9 | 10 | {0} |
| 10 | 10 | {1} |
| 11 | 10 | {2} |
| 12 | 10 | {3} |
| 13 | 10 | {0,1,2,3,4,6,8} |
| 14 | 10 | {0,1,2,3,4,5,6,8} |
| 15 | reserved | reserved |

FIG. 9

| SRS Bandwidth Configuration | UPLINK BANDWIDTH (NUMBER OF PRBS) | | | |
|---|---|---|---|---|
| | 6 ~ 40 | 41 ~ 60 | 61 ~ 80 | 81 ~ 110 |
| 0 | 36 | 48 | 72 | 96 |
| 1 | 32 | 48 | 64 | 96 |
| 2 | 24 | 40 | 60 | 80 |
| 3 | 20 | 36 | 48 | 72 |
| 4 | 16 | 32 | 48 | 64 |
| 5 | 12 | 24 | 40 | 60 |
| 6 | 8 | 20 | 36 | 48 |
| 7 | 4 | 16 | 32 | 48 |

FIG. 10

FIG. 11

FIG. 12

EP 2 733 977 A1

FIG. 13

EP 2 733 977 A1

FIG. 14

| INTERNATIONAL SEARCH REPORT | International application No. |
|---|---|
| | PCT/JP2012/006425 |

**A. CLASSIFICATION OF SUBJECT MATTER**
*H04W16/32*(2009.01)i, *H04W24/08*(2009.01)i, *H04W72/04*(2009.01)i

According to International Patent Classification (IPC) or to both national classification and IPC

**B. FIELDS SEARCHED**

Minimum documentation searched (classification system followed by classification symbols)
H04W16/32, H04W24/08, H04W72/04

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2011/099623 A1 (Kyocera Corp.), 18 August 2011 (18.08.2011), paragraphs [0025] to [0038] (Family: none) | 1-7 |
| A | picoChip Designs, Kyocera, Text Proposal for TR36.921: Victim UE Aware Interference Management, [online]. 3GPP TSG-RAN WG4 Meeting #54 R4-100426, 2010.02.22, [retrieved on 2012-10-18]. Retrieved from the Internet: <URL:http://www.3gpp.org/ftp/tsg_ran/WG4_Radio/TSGR4_54/Documents/R4-100426.zip> | 1-7 |

☐ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 18 October, 2012 (18.10.12) | 30 October, 2012 (30.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 733 977 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011222755 A